(19)

Europäisches
Patentamt
European
Patent Office
Office européen
des brevets

(11) **EP 3 157 180 A1**

(12) **EUROPEAN PATENT APPLICATION**

(43) Date of publication:
**19.04.2017  Bulletin 2017/16**

(51) Int Cl.:
***H04B 10/2543*** (2013.01)    ***H04B 10/61*** (2013.01)

(21) Application number: **15306613.9**

(22) Date of filing: **13.10.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT
92100 Boulogne-Billancourt (FR)**

(72) Inventors:
• **COSTANTINI, Carlo
  20871 Vimercate (MB) (IT)**

• **CENZATO, Luca
  20871 Vimercate (MB) (IT)**
• **GAVIOLI, Giancarlo
  20871 Vimercate (MB) (IT)**
• **GHAZISAEIDI, Amirhossein
  91620 Nozay (FR)**
• **RAZZETTI, Luca
  20871 Vimercate (MB) (IT)**
• **WEISSER, Stefan
  70435 Stuttgart (DE)**

(74) Representative: **Pietra, Giulia et al
Marchi & Partners S.r.l.
Via Vittor Pisani, 13
20124 Milano (IT)**

(54) **FIBER NONLINEARITIES COMPENSATION**

(57)    It is disclosed an apparatus for compensating nonlinear distortions induced on an optical signal during propagation along an optical link. The apparatus comprises a cascade of: a first circuit receiving a sequence of complex amplitudes $x_t$ of pulses carried by the optical signal and calculating a number of sequences of samples by carrying out nonlinear operations on the received complex amplitudes $x_t$; a second circuit comprising linear filters which filter the sequences of samples thereby providing sequences of linearly filtered samples; a third circuit calculating a sequence of perturbation nonlinear terms as a weighted sum of the sequences of linearly filtered samples by using the originally received complex amplitudes $x_t$ as weights for the weighted sum; and an adder which compensates the nonlinear distortions by subtracting the sequence of nonlinear terms from the sequence of originally received complex amplitudes $x_t$.

Figure 1

## Description

### Technical field

The present invention relates to the field of optical communication networks. More particularly, the present invention relates to the compensation, at a transmitter or coherent optical receiver for optical communication networks, of distortions induced on optical signals by fiber nonlinearities.

### Background art

As known, in optical communication networks digital data are transmitted along optical fiber links in the form of optical signals with modulated amplitude and/or phase. For instance, in QPSK (Quadrature Phase Shift Keying) the phase is modulated, whereas in QAM (Quadrature Amplitude Modulation) both amplitude and phase are modulated.

A modulation format is typically defined by a constellation, namely a set of M symbols which may be represented as M points in a complex plane (or I-Q plane). Each symbol has a certain complex amplitude (phase and modulus) and is associated with a respective label of $m=\log_2(M)$ bits. At the transmitter, each pattern of m bits of the digital data to be transmitted is mapped into the symbol whose label matches the m bits of the pattern. Then, the symbol complex amplitude is used for modulating an optical carrier for a symbol time $\tau$. A modulated optical signal is then typically in the form of a sequence of pulses of duration $\tau$, each pulse carrying a respective symbol and having a respective normalized complex amplitude. On the other hand, at the receiver side the normalized complex amplitude of each pulse of the received modulated optical signal is recovered and demapped into a corresponding label of m bits.

Polarization multiplexing modulation schemes are also known, such as PM-QPSK (Polarization-Multiplexed QPSK) or PM-QAM (Polarization-Multiplexed QAM), which provide for transmitting digital data using two polarization components x and y of a same optical signal. Each polarization component carries a respective sequence of symbols.

In an intra-dyne polarization diversity coherent receiver, the incoming polarization-multiplexed optical signal is mixed by means of a polarization and phase diversity optical front-end with the signal emitted by a local laser. The optical front-end recovers the polarization components x and y of the received optical signal. These recovered components basically correspond to the polarization components of the optical signal as originally transmitted, except for noise and distortions introduced by propagation along the optical link and/or by processing of the received optical signal at the receiver itself. Then, the recovered polarization components are converted into corresponding electric analog signals and then into corresponding digital signals (one per each polarization x and y) by an ADC (Analog to Digital Converter). The digital signals are then digitally processed for channel equalization and finally demodulated.

Channel equalization typically compensates the distortions introduced by linear effects occurring in the optical link as the polarization-multiplexed optical signal propagates therethrough, such as chromatic dispersion, polarization rotations and polarization mode dispersion (PMD).

However, as the polarization-multiplexed optical signal propagates, it also undergoes distortions due to nonlinear effects occurring in the optical link, in particular the Kerr effect. As known, the Kerr effect consists in a dependency of the refractive index of the optical mean on the intensity of the optical signal. This dependency results in distortions of the optical signal, such as SPM (Self Phase Modulation), intra-channel XPM (Cross Phase Modulation) and intra-channel FWM (Four Wave Mixing), which alter the normalized complex amplitude of the pulses and accordingly impair demodulation.

Currently, noise and distortions induced by nonlinear effects are both handled by demodulation and FEC (Forward Error Correction) algorithms, which treat them all as white Gaussian noise. However, differently from noise, distortions due to fiber nonlinearities are predictable based on known equations. Therefore, in principle they may be estimated and compensated at the receiver, or even pre-compensated at the transmitter.

Theoretical approaches are known for compensating fiber nonlinearities, which start from the assumption that propagation of optical signals in an optical fiber at the presence of nonlinearities is governed by the Non Linear Schroedinger Equation (NLSE):

$$j\frac{\partial u}{\partial z} - \frac{\beta''}{2}\frac{\partial^2 u}{\partial t^2} + \gamma|u|^2 u = 0 \qquad [1]$$

where u is the electric field, z is the spatial coordinate in the propagation direction, t is time, $\beta''$ is the group velocity dispersion and $\gamma$ is the nonlinear coefficient. The approaches for compensating nonlinearities are based on the assumption that the NLSE is invertible both in its linear and nonlinear operators.

One of these approaches is based on the known "back-propagation" algorithm, which however exhibits a high complexity and is accordingly not suitable for a practical implementation at the transmitter or receiver of an optical communication network.

Z. Tao et al., "Complexity-reduced digital nonlinear compensation for coherent optical system", Proc. Next-Generation Optical Communication: Components, Sub-Systems, and Systems II (SPIE 2013), Vol. 8647, 86470k-1, 5 February 2013 describes a digital nonlinear compensation having a complexity reduced in comparison to back propagation, which makes use of a perturbation analysis. According to the perturbation analysis, an arbitrary section of an optical link with chromatic dispersion and nonlinearities has a corresponding perturbation model whereby nonlinearity on the two polarizations x and y is modelled as an additive perturbation term $[\Delta u_x, \Delta u_y]^T$, whereas chromatic dispersion is concentrated on lumped chromatic dispersion blocks. Under the assumption of large chromatic dispersion and Gaussian input pulse, the additive perturbation term $[\Delta u_x, \Delta u_y]^T$ is:

$$\Delta u_x = \sum_{m,n} P_0^{3/2} \left( A_{n,x} A_{m+n,x}^* A_{m,x} + A_{n,y} A_{m+n,y}^* A_{m,x} \right) C_{m,n} \qquad [2a]$$

$$\Delta u_y = \sum_{m,n} P_0^{3/2} \left( A_{n,y} A_{m+n,y}^* A_{m,y} + A_{n,x} A_{m+n,x}^* A_{m,y} \right) C_{m,n} \qquad [2b]$$

where $P_0$ is the input power of the optical signal, $A_{m/n,x/y}$ is the normalized complex amplitude of the pulses, n and m are pulse indexes and $C_{m,n}$ are the nonlinear coefficients which depend on the parameters of the optical link as follows:

$$C_{m,n} = j\frac{8}{9}\frac{\gamma\tau^2}{\sqrt{3}|\beta_2|}\frac{L_{eff}}{L} E_1\left( -j\frac{mnT^2}{\beta_2 L} \right) \qquad m\neq 0,\ n\neq 0 \qquad [3a]$$

$$C_{m,n} = j\frac{8}{9}\frac{\gamma\tau^2}{\sqrt{3}|\beta_2|}\frac{L_{eff}}{L}\frac{1}{2} E_1\left( \frac{(n-m)^2 T^2 \tau^2}{3|\beta_2|^2 L^2} \right) \qquad m=0\ \text{or}\ n=0 \qquad [3b]$$

$$C_{0,0} = j\frac{8}{9}\frac{\gamma\tau^2}{\sqrt{3}|\beta_2|}\frac{L_{eff}}{L} \text{ArcSinh}(\frac{\sqrt{3}\beta_2 L}{\tau^2}) \qquad [3c]$$

wherein:

- $\beta_2$ is the group velocity dispersion;
- $\gamma$ is the nonlinear coefficient;
- r is the pulse width;
- T is the inverse of the pulse rate;
- $L_{eff}$ is the effective length;
- L is the transmission distance; and
- $E_1(\cdot)$ is the exponential integral function.

The nonlinear coefficient $C_{0,0}$ corresponds to the SPM, the coefficients $C_{m,0}$ and $C_{0,n}$ correspond to the intra-channel XPM and the coefficients $C_{m,n}$ (with $m\neq 0$, $n\neq 0$) correspond to the intra-channel FWM.

Further, the nonlinear coefficients $C_{m,n}$ have the following two properties:

$$C_{m,n} = -C_{m,-n}^*$$

and

$$C_{m,n} = C_{n,m}.$$

The perturbation term calculated according to equations [2a], [2b] includes two dimensional summations of three product terms and it therefore quite complex. The circuit implementing the above equations [2a], [2b] e.g. as a pre-compensation at the transmitter comprises two perturbation calculation blocks, a look up table and two adders. The look up table stores the values of the nonlinear coefficients $C_{m,n}$, which are pre-calculated according to the above equations [3a], [3b], [3c]. Each perturbation calculation block receives two inputs, namely the pulse sequence carried by the polarization component x and the pulse sequence carried by the polarization component y. Then, each perturbation calculation block uses the received pulse sequences and the nonlinear coefficients $C_{m,n}$ retrieved from the lookup table in order to calculate the perturbation term $[\Delta u_x, \Delta u_y]^T$ according to equations [2a], [2b]. The adders then subtract the calculated perturbation term $[\Delta u_x, \Delta u_y]^T$ from the pulse sequences carried by the polarization components x, y.

## Summary of the invention

Though in principle, according to the perturbation theory, in the two dimensional summations of the above equations [2a], [2b] the pulse indexes n and m should run from $-\infty$ to $+\infty$, the two dimensional summations may be truncated to n, m=-N, ...N, N being a finite integer number. The complexity (namely, the number of operations per symbol) of the above circuit implementing the above equations [2a], [2b] as described above therefore mainly depends on the number N, and scales as $O((2N)^2)$.

A value of e.g. N=100 induces negligible penalties on the accuracy of the perturbation term $[\Delta u_x, \Delta u_y]^T$ estimated using equations [2a], [2b]. However, with N=100 the complexity of the circuit is still very high, since $(2N)^2$=40.000 operations per symbol are required. This complexity is orders of magnitude larger than the complexity of the other digital blocks of a transmitter or receiver (e.g. of the linear equalizer of the receiver). The physical implementation of a circuit compensating fiber nonlinearities by plainly implementing the above equations [2a], [2b] is therefore prohibitive. On the other hand, reducing N in order to reduce complexity to a lower degree allowing physical implementation of the circuit leads to significant penalties on the accuracy of the estimated perturbation term $[\Delta u_x, \Delta u_y]^T$.

In view of the above, it is an object of the present invention to provide an apparatus and a method for compensating, at a transmitter or at a coherent optical receiver, the distortions induced by fiber nonlinearities, whose complexity is much reduced in comparison to the above known circuit and which, at the same time, substantially does not introduce performance penalties.

In the present description and in the claims, the expression "nonlinear operation on pulses complex amplitudes" will designate an operation comprising at least one multiplication between two complex amplitudes of either a same pulse sequence (for example $x_t x_{t-n}^*$ , $y_t y_{t-n}^*$) or two different pulse sequences (for example $x_t y_{t-n}^*$).

According to a first aspect, the present invention provides an apparatus for compensating nonlinear distortions induced on an optical signal during propagation along an optical link, the apparatus comprising a cascade of:

(i) a first circuit configured to receive a sequence of first complex amplitudes $x_t$ of consecutive pulses carried by a first polarization component x of the optical signal, the first circuit being configured to calculate a number of sequences of samples by carrying out at least one nonlinear operation on the first complex amplitudes $x_t$;

(ii) a second circuit comprising a number of linear filters configured to receive and linearly filter the number of sequences of samples so as to provide a number of corresponding sequences of linearly filtered samples;

(iii) a third circuit configured to calculate a sequence of first polarization components $\Delta x_t$ of a perturbation nonlinear term $[\Delta x_t, \Delta y_t]^T$ as a first weighted sum of the number of sequences of linearly filtered samples by using the first complex amplitudes $x_t$ as weights of the first weighted sum; and

(iv) at least one adder configured to compensate the nonlinear distortions by subtracting the sequence of first polarization components $\Delta x_t$ of the perturbation nonlinear term $[\Delta x_t, \Delta y_t]^T$ from the sequence of first complex amplitudes $x_t$.

Preferably, in the apparatus:

• the first circuit is further configured to receive a sequence of second complex amplitudes $y_t$ of consecutive pulses carried by a second polarization component (y) of the optical signal, the first circuit being configured to calculate the number of sequences of samples by carrying out the at least one nonlinear operation on the first complex amplitudes $x_t$ and on the second complex amplitudes $y_t$;

• the third circuit is further configured to calculate a sequence of second polarization components $\Delta y_t$ of the perturbation nonlinear term $[\Delta x_t, \Delta y_t]^T$ as a second weighted sum of the number of sequences of linearly filtered samples by using the second complex amplitudes $y_t$ as weights of the second weighted sum; and
- the at least one adder is further configured to compensate the nonlinear distortions by subtracting the sequence of second polarization components $\Delta y_t$ of the perturbation nonlinear term $[\Delta x_t, \Delta y_t]^T$ from the sequence of second complex amplitudes $y_t$.

According to a first embodiment, the first circuit is configured to calculate N+1 sequences of samples $d_t^{(n)}$ as:

$$d_t^{(n)} = x_t x_{t-n}^* + y_t y_{t-n}^*,$$

where n is an index ranging between 0 and N and N is an integer number.

Preferably, N is comprised between 80 and 120, more preferably is equal to 100.

Preferably, second circuit comprises N+1 linear filters configured to receive the N+1 sequences of samples $d_t^{(n)}$ and to provide N+1 corresponding sequences of linearly filtered samples $o_t^{(n)}$ as:

$$o_t^{(n)} = \sum_{m=-N}^{N} d_{t-m}^{(n)} C_{m,n},$$

where $C_{m,n}$ with m=-N... N is the impulse response of the linear filter.

Preferably, the third circuit is configured to calculate the sequence of first polarization components $\Delta x_t$ of the perturbation nonlinear term $[\Delta x_t, \Delta y_t]^T$ and the second polarization components $\Delta y_t$ of the perturbation nonlinear term $[\Delta x_t, \Delta y_t]^T$ as:

$$\Delta x_t = \sum_{n=-N}^{N} x_{t-n} o_t^{(n)}$$

$$\Delta y_t = \sum_{n=-N}^{N} y_{t-n} o_t^{(n)}.$$

According to a second embodiment, the first circuit is configured to calculate 4K+4 sequences of samples $d1_t^{(n)}$, $d2_t^{(n)}$, $d3_t^{(n)}$, $d4_t^{(n)}$ as:

$$d1_t^{(n)} = x_t x_{t-n}^*, \quad d2_t^{(n)} = y_t y_{t-n}^*, \quad d3_t^{(n)} = x_t y_{t-n}^*, \quad d4_t^{(n)} = y_t x_{t-n}^*$$

where n is an index ranging between 0 and K and K is an integer number.

Preferably, K is comprised between 3 and 10

Preferably, the second circuit comprises 4K+4 linear filters configured to receive the sequences of samples $d1_t^{(n)}$, $d2_t^{(n)}$, $d3_t^{(n)}$, $d4_t^{(n)}$ and to provide 4K+4 sequences of linearly filtered samples $o1_t^{(n)}$, $o2_t^{(n)}$, $o3_t^{(n)}$, $o4_t^{(n)}$ as:

$$o1_t^{(n)} = \sum_{m=-N}^{N} (2d1_{t-m}^{(n)} + d2_{t-m}^{(n)}) C_{m,n}$$

$$o2_t^{(n)} = \sum_{m=-N}^{N} d3_{t-m}^{(n)} C_{m,n}$$

$$o3_t^{(n)} = \sum_{m=-N}^{N} (2d2_{t-m}^{(n)} + d1_{t-m}^{(n)}) C_{m,n}$$

$$o4_t^{(n)} = \sum_{m=-N}^{N} d4_{t-m}^{(n)} C_{m,n} \, ,$$

where $C_{m,n}$ with $m=-N... N$ are the impulse response of the linear filters.

Preferably, the third circuit is configured to calculate the sequence of first polarization components $\Delta x_t$ of the perturbation nonlinear term $[\Delta x_t, \Delta y_t]^T$ and the second polarization components $\Delta y_t$ of the perturbation nonlinear term $[\Delta x_t, \Delta y_t]^T$ as:

$$\Delta x_t = \sum_{n=-K}^{K} \left( x_{t-n} o1_t^{(n)} + y_{t-n} o2_t^{(n)} \right)$$

$$\Delta y_t = \sum_{n=-K}^{K} \left( y_{t-n} o3_t^{(n)} + x_{t-n} o4_t^{(n)} \right).$$

Preferably, each one of the number of linear filters is a FIR filter implemented in the frequency domain as a cascade of an FFT block, a multiplier and an IFFT block.

According to a second aspect, the present invention provides a transmitter for an optical coherent transmission system comprising an apparatus for compensating nonlinear distortions as set forth above.

According to a third aspect, the present invention provides a receiver for an optical coherent transmission system comprising an apparatus for compensating nonlinear distortions as set forth above.

According to a fourth aspect, the present invention provides a method for compensating nonlinear distortions induced on an optical signal during propagation along an optical link, the method comprising:

(i) receiving a sequence of first complex amplitudes $x_t$ of consecutive pulses carried by a first polarization component x of the optical signal, and calculating a number of sequences of samples by carrying out at least one nonlinear operation on the first complex amplitudes $x_t$;

(ii) receive and linearly filter the number of sequences of samples so as to provide a number of corresponding sequences of linearly filtered samples;

(iii) calculating a sequence of first polarization components $\Delta x_t$ of a perturbation nonlinear term $[\Delta x_t, \Delta y_t]^T$ as a first weighted sum of the number of sequences of linearly filtered samples by using the first complex amplitudes $x_t$ as weights of the first weighted sum; and

(iv) compensating the nonlinear distortions by subtracting the sequence of first polarization components $\Delta x_t$ of the perturbation nonlinear term $[\Delta x_t, \Delta y_t]^T$ from the sequence of first complex amplitudes $x_t$.

According to a fourth aspect, the present invention provides a computer program product comprising computer-executable instructions for performing, when the program is run on a computer, the steps of the method set forth above.

## Brief description of the drawings

The present invention will become clearer by reading the following detailed description, given by way of example and not of limitation, to be read by referring to the accompanying drawings, wherein:

- Figure 1 schematically shows an apparatus for compensating fiber nonlinearities according to a first embodiment of the present invention;
- Figure 2 is a diagram of the values of the nonlinear coefficients $C_{m,n}$ as a function of the pulse indexes n, m;
- Figure 3 schematically shows two different domain restrictions operated on the nonlinear coefficients $C_{m,n}$, according to preferred variants of the present invention;
- Figure 4 schematically shows an apparatus for compensating fiber nonlinearities according to a second embodiment of the present invention;
- Figure 5 is a diagram showing the gain of Q-factor as a function of the domain restriction parameter K; and
- Figures 6a and 6b show an optical transmitter and an optical coherent receiver, respectively, including an apparatus for compensating fiber nonlinearities according to embodiments of the present invention.

**Detailed description of preferred embodiments of the invention**

Equations [2a], [2b] providing the additive perturbation term $[\Delta u_x, \Delta u_y]^T$ on the two polarizations x and y may be written to include for time dependency:

$$\Delta x_t = \sum_{m=-N}^{N} \sum_{n=-N}^{N} \left( x_{t-m} x_{t-n} x_{t-m-n}^* + y_{t-m} x_{t-n} y_{t-m-n}^* \right) C_{m,n} \qquad [4a]$$

$$\Delta y_t = \sum_{m=-N}^{N} \sum_{n=-N}^{N} \left( y_{t-m} y_{t-n} y_{t-m-n}^* + x_{t-m} y_{t-n} x_{t-m-n}^* \right) C_{m,n} \qquad [4b]$$

where $x_{t-m-n}=A_{m-n,x}$ and $y_{t-m-n}=A_{m-n,y}$ are the normalized pulse complex amplitudes, while t is the time index. The inventors have noticed that, by factorizing the two dimensional summations, equations [4a] and [4b] may be rewritten in the form of digital linear filters, as follows:

$$\Delta x_t = \sum_{n=-N}^{N} x_{t-n} \sum_{m=-N}^{N} d_{t-m}^{(n)} C_{m,n} \qquad [5a]$$

$$\Delta y_t = \sum_{n=-N}^{N} y_{t-n} \sum_{m=-N}^{N} d_{t-m}^{(n)} C_{m,n} \qquad [5b]$$

wherein:

$$d_t^{(n)} = x_t x_{t-n}^* + y_t y_{t-n}^* . \qquad [6]$$

N

It shall be noticed that the same term $\sum_{m=-N}^{N} d_{t-m}^{(n)} C_{m,n}$ is present in both equations [5a] and [5b]. For each value of the index n, this term is a digital linear filter with input $d_t^{(n)}$ and impulse response $c_{m,n}$. So, $\Delta x_t$ and $\Delta y_t$ can be computed as the weighted sum of 2N+1 linear filters outputs. This is advantageous because FIR filters can be efficiently implemented in frequency domain, as it will be discussed in detail herein after.

Moreover, since as mentioned above $C_{m,n} = -C_{m,n}^*$ and

$$d_t^{(-n)} = x_t x_{t+n}^* + y_t y_{t+n}^* = x_{(t+n)-n} x_{t+n}^* + y_{(t+n)-n} y_{t+n}^* = d_{t+n}^{(n)}$$

it follows that:

$$\sum_{m=-N}^{N} d_{t-m}^{(-n)} C_{m,-n} = -( \sum_{m=-N}^{N} d_{t+n-m}^{(n)} C_{m,n} ) *$$

Further, since the FIR filters are time invariant,

$$o_t^{(-n)} = -(o_{t+n}^{(n)}) *$$

where $o_t^{(n)}$ is the output of the $n^{th}$ FIR filter at time t.

In other words, the outputs of the FIR filters with positive values of index n may be easily obtained from the outputs of the FIR filters with negative n, with a delay and a conjugation. This advantageously reduces the number of FIR filters needed from 2N+1 to N+1 only.

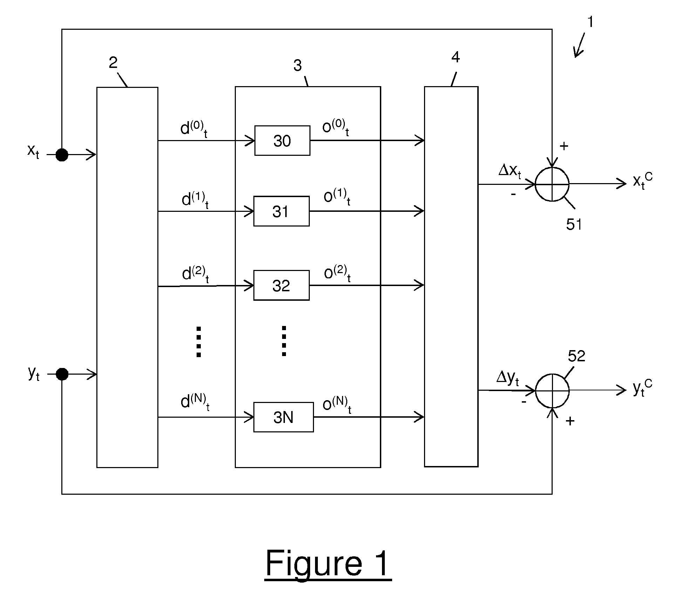

Figure 1 schematically shows an apparatus 1 for compensating fiber nonlinearities according to a first embodiment of the present invention, which estimates the perturbation term $[\Delta x_t, \Delta y_t]^T$ by implementing equations [5a], [5b].

As it will be discussed in detail herein after, the apparatus 1 may be implemented either at an optical transmitter (where it pre-compensate fiber nonlinearities before they occur) or at an optical coherent receiver (where it compensate fiber nonlinearities after they have occurred).

The apparatus 1 preferably comprises a cascade of a first circuit 2, a second circuit 3 and a third circuit 4.

The first circuit 2 is configured to receive two sequences of symbols $x_t$, $y_t$ (one sequence per each polarization component x, y) and to process them to calculate N+1 sequences of samples $d_t^{(n)}$ (n=0, 1, 2 ... N) according to the above equation [6].

In particular, the first circuit 2 preferably comprises at least two memory circuits. The first memory circuit is suitable for storing the digitalized and normalized complex amplitudes $x_{t-N}$, $x_{t-N+1}$ ..., $x_{t-2}$, $x_{t-1}$, $x_t$ of a block of consecutive symbols carried by the polarization x, while a second memory circuit is suitable for storing the digitalized and normalized complex amplitudes $y_{t-N}$, $y_{t-N+1}$ ..., $y_{t-2}$, $y_{t-1}$, $y_t$ of a block of consecutive symbols carried by the polarization y.

The first circuit 2 then comprises a plurality of adders, multipliers and complex conjugate elements which combine the content of the memory circuits so as to provide N+1 sequences of samples $d_t^{(n)}$ (n=0, 1, 2 ... N) according to the above equation [6], namely:

$$d_t^{(0)} = x_t x_t^* + y_t y_t^*$$
$$d_t^{(1)} = x_t x_{t-1}^* + y_t y_{t-1}^*$$

$$d_t^{(2)} = x_t x_{t-2}^* + y_t y_{t-2}^*$$

$$...$$

$$d_t^{(N)} = x_t x_{t-N}^* + y_t y_{t-N}^* .$$

The second circuit 3 preferably is a linear circuit suitable for receiving the N+1 sequences of samples $d_t^{(n)}$ (n=0, 1, 2 ... N) and to linearly filter them, so as to provide N+1 sequences of linearly filtered samples $o_t^{(n)}$ (n=0, 1,2, ... N) wherein:

$$o_t^{(n)} = \sum_{m=-N}^{N} d_{t-m}^{(n)} C_{m,n} \qquad [8]$$

In particular, the second circuit 3 preferably comprises N+1 linear filters 30, 31, 32 ..., 3N, each linear filter 30, 31, 32 ..., 3N being configured to receive and linearly filter a respective sequence of samples $d_t^{(0)}$, $d_t^{(1)}$, $d_t^{(2)}$, ... $d_t^{(N)}$ according to equation [8]. Each linear filter 30, 31, 32 ..., 3N therefore provides at its output a respective sequence of linearly filtered samples $o_t^{(0)}$, $o_t^{(1)}$, $o_t^{(2)}$, ... $o_t^{(N)}$, wherein:

$$o_t^{(0)} = \sum_{m=-N}^{N} d_{t-m}^{(0)} C_{m,0}$$

$$o_t^{(1)} = \sum_{m=-N}^{N} d_{t-m}^{(1)} C_{m,1}$$

$$o_t^{(2)} = \sum_{m=-N}^{N} d_{t-m}^{(2)} C_{m,2}$$

$$\ldots$$

$$o_t^{(N)} = \sum_{m=-N}^{N} d_{t-m}^{(N)} C_{m,N} \cdot$$

Each linear filter 30, 31, 32 ..., 3N preferably is a FIR filter with coefficients $C_{m,0}$, $C_{m,1}$, $C_{m,2}$, ... $C_{m,N}$ (with m=-N, ... N). Hence, each linear filter 30, 31, 32 ..., 3N has a filter length 2N+1. Each linear filter 30, 31, 32 ..., 3N is preferably implemented in the frequency domain, namely it is implemented as a cascade of a FFT (Fast Fourier Transform) block, a multiplier and an inverse FFT block. This allows reducing the complexity of each single filter, and then of the whole second circuit 3 (and, ultimately, of the whole apparatus 1), as it will be discussed in detail herein after.

The third circuit 4 preferably is configured to implement two different weighted sums of the filter outputs $o_t^{(n)}$ (n=0, 1, ... N), namely:

$$\Delta x_t = \sum_{n=-N}^{N} x_{t-n} o_t^{(n)} \qquad [9a]$$

$$\Delta y_t = \sum_{n=-N}^{N} y_{t-n} o_t^{(n)} \qquad [9b]$$

The two weighted sums differ in the weights, which are the symbols $x_t$ originally received on polarization x for $\Delta x_t$ (equation [9a]) and the symbols $y_t$ originally received on polarization y for $\Delta y_t$ (equation [9b]).
It may be noticed that - though the summations of equations [9a] and [9b] implemented by the third circuit 4 comprise 2N+1 terms (since n ranges from -N to N), the third circuit 4 is capable of computing these summations starting from only N+1 terms $o_t^{(0)}$, $o_t^{(1)}$, $o_t^{(2)}$, ... $o_t^{(N)}$ received from the second circuit 2. As mentioned above, the other N terms $o_t^{(-n)}$ with n=1, 2, ... N are indeed delayed versions of the terms $o_t^{(n)}$ with n=1, 2, ... N, assuming a stationary

distribution (namely $O_t^{(-n)} = -(O_{t+n}^{(n)})*$ ).

The apparatus 1 finally comprise due adders 51, 52 which subtract the perturbation term $[\Delta x_t, \Delta y_t]^T$ calculated for each pair of symbols $x_t, y_t$ at the time t from the complex amplitudes of the symbols themselves, so as to provide a pair of compensated symbols $x_t^C, y_t^C$.

The complexity of the apparatus 1 according to the first embodiment of the present invention is advantageously much lower than the complexity of a known circuit calculating the perturbation term $[\Delta x_t, \Delta y_t]^T$ by plainly implementing equations [2a], [2b].

The overall complexity C1 of the apparatus 1 is indeed equal to C2+C3+C4, wherein C2 is the complexity of the first circuit 2, C3 is the complexity of the second linear circuit 3 and C4 is the complexity of the third circuit 4. The complexities C2 and C4 scale with the number of parallel filters in the first circuit 2, and is thus O(N). As to C3, as mentioned above, the linear circuit 3 comprises N+1 linear filters 30, 31, 32 ..., 3N, each filter having length L=2N+1. Assuming that each filter is implemented in the frequency domain as explained above, the complexity of each single linear filter scales as O(logN).

Assuming e.g. N=100 (which, as discussed above, is a value inducing negligible penalties on the accuracy of the perturbation term due to truncation of the double running summations of equations [2a], [2b]), the known circuit implementing equations [2a], [2b] has a complexity which scales as $O((2N)^2)$, thus for N= 100 this equal to 40.000. For the same value of N, the complexity C3 of the linear circuit 3 is $(N+1)\log_2(2N) \cong 770$. Considering that C3 is the major contributor to the overall circuit complexity, the number of operations per sample is therefore reduced by orders of magnitude.

Hence, the apparatus 1 according to the first embodiment of the present invention is much less complex than a circuit calculating the perturbation term $[\Delta x_t, \Delta y_t]^T$ by plainly implementing equations [2a], [2b]. Hence, it may be practically implemented at either an optical transmitter or an optical coherent receiver, as it will be described in detail herein after.

Furthermore, advantageously, no penalties are introduced in the estimation of the perturbation term $[\Delta x_t, \Delta y_t]^T$, because equations [5a], [5b] are directly derived from equations [2a], [2b] by means of simple algebraic passages, without introducing any approximation.

The inventors have noticed that the complexity C3 of the linear circuit 3 (and hence of the whole apparatus 1) may be further reduced.

The inventors have indeed noticed that in the summations of equations [4a], [4b] not all the terms provide a significant contribution, because the values of the nonlinear coefficients $C_{m,n}$ depend on the values of the pulse indexes m,n.

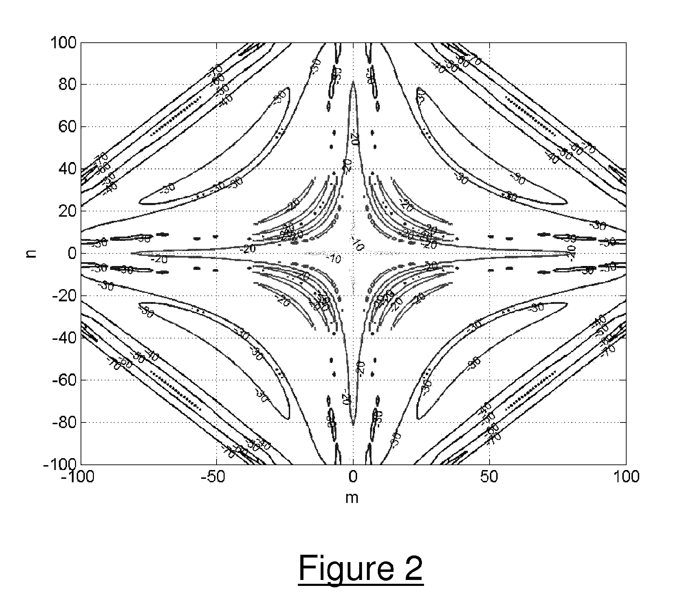

Figure 2 shows a contour plot of exemplary values of the nonlinear coefficients $C_{m,n}$ for a typical optical link, as a function of the pulse indexes n, m with N=100, $\beta_2$ =20 ps$^2$/km, $\gamma$ =1.3 (WKm)$^{-1}$, T=30 ps, $L_{eff}$ = 20 km and L=1500 km. The values shown in Figure 2 are normalized relative to the value of $C_{0,0}$ and are represented in logarithmic scale. It can be seen that for large |nm|, i.e. far from the axes n=0 and m=0, the nonlinear coefficients $C_{m,n}$ have close to zero value. As a consequence, their contribute to the above sums can be discarded without effects.

More particularly, according to advantageous variants, the nonlinear coefficients $C_{m,n}$ (n,m=-N, ... N) are subjected to a domain restriction, meaning that a certain area is identified in the n,m plane, which comprises the nonlinear coefficients $C_{m,n}$ whose value is less significant and is accordingly set equal to zero. Since, as discussed above, the nonlinear coefficients $C_{m,n}$ decrease from $C_{0,0}$ as the distance from the axes n=0, m=0 increases, according to an advantageous variant the domain restriction is defined as follows:

$$\min(|n|, |m|) > K , \qquad\qquad [10]$$

K (which will be termed herein after also "domain restriction parameter") being an integer number lower than N.

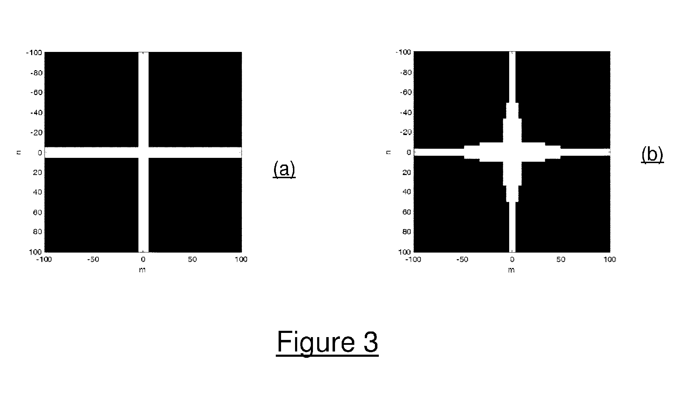

Equation [10] basically defines in the n,m plane a cross-shaped domain restriction which is schematically depicted in Figure 3(a). The black areas comprise the values of n, m fulfilling the condition set by equation [10], under the assumption that K=4. The nonlinear coefficients $C_{m,n}$ whose pulse indexes n, m fulfil equation [10] are then set equal to zero, meaning that the summations of equations [4a], [4b] are truncated at n, m=-K ...K. Equation [10] is not limiting, since other domain restrictions are possible. Figure 3(b) shows a further exemplary domain restriction, wherein the boundaries between the areas comprising the less significant nonlinear coefficients and the area close to the axes n=0, m=0 which comprises the more significant coefficients are more refined than in Figure 3(a).

Referring again to Figure 3(a), equations [4a], [4b] with the truncation to n, m=-K, ... K may be rewritten as follows:

$$\Delta x_t = \sum_{n=-K}^{K} \sum_{n=-N}^{N} \left( x_{t-m}x_{t-n}x_{t-m-n}^* + y_{t-m}x_{t-n}y_{t-m-n}^* \right) \check{C}_{m,n}$$
$$+ \sum_{m=-K}^{K} \sum_{m=-N}^{N} \left( x_{t-m}x_{t-n}x_{t-m-n}^* + y_{t-m}x_{t-n}y_{t-m-n}^* \right) \check{C}_{m,n} \qquad [11a]$$

$$\Delta y_t = \sum_{n=-K}^{K} \sum_{n=-N}^{N} \left( y_{t-m}y_{t-n}y_{t-m-n}^* + x_{t-m}y_{t-n}x_{t-m-n}^* \right) \check{C}_{m,n}$$
$$+ \sum_{m=-K}^{K} \sum_{m=-N}^{N} \left( y_{t-m}y_{t-n}y_{t-m-n}^* + x_{t-m}y_{t-n}x_{t-m-n}^* \right) \check{C}_{m,n} \qquad [11b]$$

Equations [11 a], [11 b] may be further rewritten as follows:

$$\Delta u_x(t) = \sum_{n=-K}^{K} \left( x_{t-n} \sum_{m=-N}^{N} (2d1_{t-m}^{(n)} + d2_{t-m}^{(n)}) \check{C}_{m,n} + y_{t-n} \sum_{m=-N}^{N} d3_{t-m}^{(n)} \check{C}_{m,n} \right) \qquad [12a]$$

$$\Delta u_y(t) = \sum_{n=-K}^{K} \left( y_{t-n} \sum_{m=-N}^{N} (2d2_{t-m}^{(n)} + d1_{t-m}^{(n)}) \check{C}_{m,n} + x_{t-n} \sum_{m=-N}^{N} d4_{t-m}^{(n)} \check{C}_{m,n} \right) \qquad [12b]$$

wherein:

$$d1_t^{(n)} = x_t x_{t-n}^*, \, d2_t^{(n)} = y_t y_{t-n}^*, \, d3_t^{(n)} = x_t y_{t-n}^*, \, d4_t^{(n)} = y_t x_{t-n}^* \qquad [13]$$

and $C_{m,n}=C_{m,n}/2$ if $max(|m|,|n|) \leq K$, while $C_{m,n}=C_{m,n}$ if $max(|m|,|n|)>K$ (meaning that in the central region the contributions are summed twice).

Under these assumptions, the perturbation term $[\Delta x_t, \Delta y_t]^T$ may be therefore advantageously computed using 4K+4 linear filters instead of N+1. By choosing K<<N, the complexity of the linear circuit 2 may be accordingly particularly reduced, as it will be discussed in detail herein after.

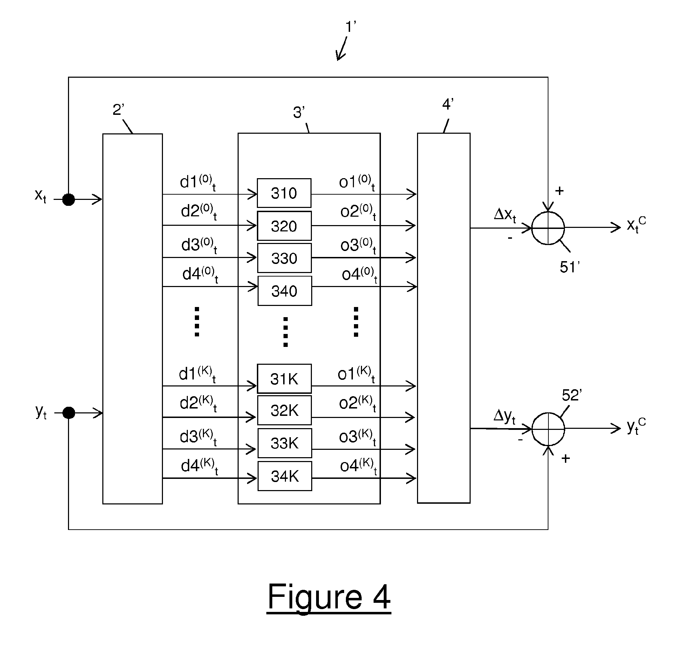

Figure 4 schematically shows an apparatus 1' for compensating fiber nonlinearities according to a second embodiment of the present invention, which estimates the perturbation term $[\Delta x_t, \Delta y_t]^T$ by implementing equations [12a], [12b].

As it will be discussed in detail herein after, also the apparatus 1' may be implemented either at an optical transmitter (where it pre-compensate fiber nonlinearities before they occur) or at an optical coherent receiver (where it compensate fiber nonlinearities after they have occurred).

Similarly to the apparatus 1 shown in Figure 1, the apparatus 1' preferably comprises a cascade of a first circuit 2', a second circuit 3' and a third circuit 4'.

Under the domain restriction condition of equation [10], the first circuit 2' is a nonlinear circuit configured to receive two sequences of symbols $x_t$, $y_t$ (one sequence per each polarization x, y) and to process them to calculate 4K+4 sequences of samples $d1_t^{(n)}, d2_t^{(n)}, d3_t^{(n)}, d4_t^{(n)}$ (n=0, 1,2, ... K) according to equations [13].

In particular, the first circuit 2' preferably comprises memory circuits. The first memory circuit is suitable for storing the digitalized and normalized complex amplitudes $x_{t-K}, x_{t-K+1} ..., x_{t-2}, x_{t-1}, x_t$ of a block of consecutive symbols carried by the polarization x, while a second memory circuit is suitable for storing the digitalized and normalized complex amplitudes $y_{t-K}, y_{t-K+1} ..., y_{t-2}, y_{t-1}, y_t$ of a block of consecutive symbols carried by the polarization y.

The first circuit 2' then comprises a plurality of adders, multipliers and complex conjugate elements which combine the content of the memory circuits so as to provide 4K+4 sequences of samples $d1_t^{(n)}, d2_t^{(n)}, d3_t^{(n)},$

$d4_t^{(n)}$ (n=0, 1, 2, ... K) according to equations [13].

The second circuit 3' preferably is a linear circuit suitable for receiving the 4K+4 sequences of samples $d1_t^{(n)}$, $d2_t^{(n)}$, $d3_t^{(n)}$, $d4_t^{(n)}$ (n=0, 1, 2, ... K) and to linearly filter them, so as to provide 4K+4 sequences of linearly filtered samples $o1_t^{(n)}$, $o2_t^{(n)}$, $o3_t^{(n)}$, $o4_t^{(n)}$ (n=0, 1, 2, ... K) wherein:

$$o1_t^{(n)} = \sum_{m=-N}^{N}(2d1_{t-m}^{(n)} + d2_{t-m}^{(n)})C_{m,n} \qquad [14a]$$

$$o2_t^{(n)} = \sum_{m=-N}^{N}d3_{t-m}^{(n)}C_{m,n} \qquad [14b]$$

$$o3_t^{(n)} = \sum_{m=-N}^{N}(2d2_{t-m}^{(n)} + d1_{t-m}^{(n)})C_{m,n} \qquad [14c]$$

$$o4_t^{(n)} = \sum_{m=-N}^{N}d4_{t-m}^{(n)}C_{m,n} \cdot \qquad [14d]$$

In particular, the second circuit 3' preferably comprises 4K+4 linear filters 310, 320, 330, 340 ... 31 K, 32K, 33K, 34K each linear filter being configured to output a respective sequence of linearly filtered samples $o1_t^{(n)}$, $o2_t^{(n)}$, $o3_t^{(n)}$, $o4_t^{(n)}$ (n=0, 1, 2, ... K) calculated starting from the sequences of nonlinear symbols $d1_t^{(n)}$, $d2_t^{(n)}$, $d3_t^{(n)}$, $d4_t^{(n)}$ (n=0, 1, 2, ... K) according to the above equations [14a], [14b], [14c], [14d].

Each linear filter 310, 320, 330, 340 ... 31 K, 32K, 33K, 34K has a filter length 2N+1. Each linear filter 310, 320, 330, 340 ... 31 K, 32K, 33K, 34K is preferably implemented in the frequency domain, namely it is implemented as a cascade of a FFT (Fast Fourier Transform) block, a multiplier and an inverse FFT block. This allows reducing the complexity of each single filter, and then of the whole second circuit 3' (and, ultimately, of the whole apparatus 1), as discussed above.

The third circuit 4' preferably is a nonlinear circuit configured to implement a weighted sum of the filter outputs $o1_t^{(n)}$, $o2_t^{(n)}$ given by equations [14a], [14b] and a weighted sum of the filter outputs $o3_t^{(n)}$, $o4_t^{(n)}$ given by equations [14c], [14d], namely:

$$\Delta x_t = \sum_{n=-K}^{K}\left(x_{t-n}o1_t^{(n)} + y_{t-n}o2_t^{(n)}\right) \qquad [15a]$$

$$\Delta y_t = \sum_{n=-K}^{K}\left(y_{t-n}o3_t^{(n)} + x_{t-n}o4_t^{(n)}\right) \qquad [15b]$$

It may be noticed that - though the sums of equation [15a] and [15b] implemented by the third circuit 4' comprise 8K+4 terms (since n ranges from -K to K) - the third circuit 4' is capable of computing these summations starting from only 4K+4 terms $o1_t^{(n)}$, $o2_t^{(n)}$, $o3_t^{(n)}$, $o4_t^{(n)}$ (n=0, 1, 2, ... K). Indeed, C(m,n)=-C*(m,n) and therefore terms with n positive and n negative may be combined together.

The apparatus 1' finally comprise due adders 51', 52' which subtract the perturbation term $[\Delta x_t, \Delta y_t]^T$ calculated for each pair of symbols $x_t$, $y_t$ at the time t from the complex amplitudes of the symbols themselves, so as to provide a pair of compensated symbols $x_t^C$, $y_t^C$.

The complexity of the apparatus 1' according to this second embodiment is much lower than the complexity of a known circuit calculating the perturbation term $[\Delta x_t, \Delta y_t]^T$ by plainly implementing equations [2a], [2b], and even much lower than the complexity of the apparatus 1 shown in Figure 1.

The overall complexity C1' of the apparatus 1' is indeed equal to C2'+C3'+C4', wherein C2' is the complexity of the first nonlinear circuit 2', C3' is the complexity of the second linear circuit 3' and C4' is the complexity of the third nonlinear circuit 4'. The complexities C2' and C4' scales as O(N). As to C3', as mentioned above the linear circuit 3' comprises 4K+4 linear filters, each filter having length L=2N+1. Assuming that each filter is implemented in the frequency domain as explained above, the complexity of each single linear filter scales as O(logN).

Assuming e.g. N=100 (which, as discussed above, is a value inducing negligible penalties on the accuracy of the perturbation term due to truncation of the double running summations of equations [2a], [2b]) and assuming e.g. K=4, the complexity C3' of the linear circuit 3' is (4K+4)(log$_2$2N)≅150, which is two orders of magnitude lower than the complexity of a known circuit plainly implementing equations [2a], [2b].

It may also be noticed that, due to symmetries evident from algebraic inspection, the term with n=0 can be realized with 2 filters instead of 4, meaning that according to a particularly preferred variant the circuit 3' comprises 4K+2 filters, instead of 4K+4. The complexity C3' according to this variant is accordingly (4K+2)(log$_2$2N). With N=100 and K=4, the complexity C3' is accordingly (4K+2)(log$_2$2N)≅137.

Furthermore, advantageously, the domain restriction parameter K may be selected so as to minimize the penalties which the further truncation of the summations in equations [2a], [2b] to n,m=-K, ... K induces on the estimation of the nonlinear term $[\Delta x_t, \Delta y_t]^T$.

In particular, the inventors have performed numerical simulations of nonlinear propagation, with a domain restrictive perturbative nonlinear pre-compensation algorithm carried out at the transmitter side. A 3-channel 32 GBaud PDM-16QAM WDM transmission over 20 spans of standard SMF fiber has been simulated ($\beta_2$ =20 ps2/km, $\gamma$ =1.3 (WKm)$^{-1}$, T=30 ps, L$_{eff}$ = 20 km and L=1500 km).

In order to model fiber nonlinearity, a standard split-step Fourier method has been used. The Q-factor (which as known is a measure of the optical signal to noise ratio and is related to the BER as BER = 1/2erfc(Q/sqrt(2)) has been calculated in two scenarios, namely (i) without fiber nonlinearities compensation and (ii) with fiber nonlinearities pre-compensation based on the above perturbation theory. Then, the gain of Q-factor due to application of the fiber nonlinearities pre-compensation has been calculated. The domain restriction was based on the above equation [10] (cross-shaped domain restriction), and the gain of Q-factor has been calculated for K=1, 2, ... 10. Also the gain in case of fiber nonlinearities pre-compensation without domain restriction has been calculated, and was found to be ≈ 0.7.

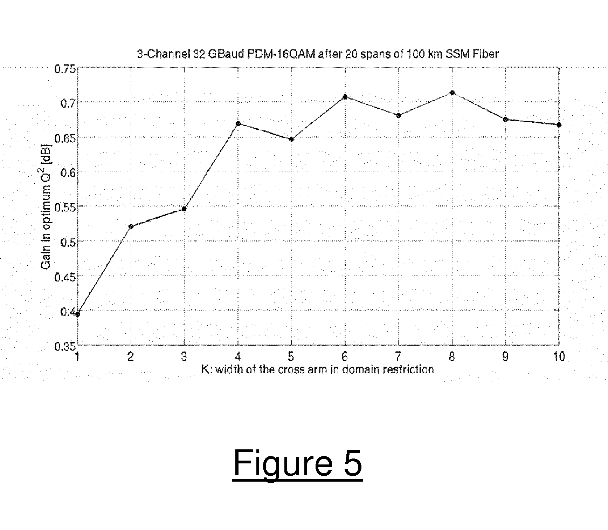

The graph of Figure 5 shows the calculated gain of Q-factor vs K. It may be appreciated from the graph that the gain of Q-factor firstly increases as K increases, and then reaches a sort of plateau in the range K=4 to K=10. In this plateau, the gain of Q-factor is of 0.65-0.7 dB about, namely it is as high as the domain unrestricted case. Hence, a value of K=4 basically provides the same gain of Q-factor as the unrestricted case and, at the same time, allows minimizing the complexity of the apparatus which calculates the perturbation term $[\Delta x_t, \Delta y_t]^T$. The domain restriction parameter K is then preferably comprised between 3 and 10, more preferably between 3 and 5, even more preferably it is equal to 4.

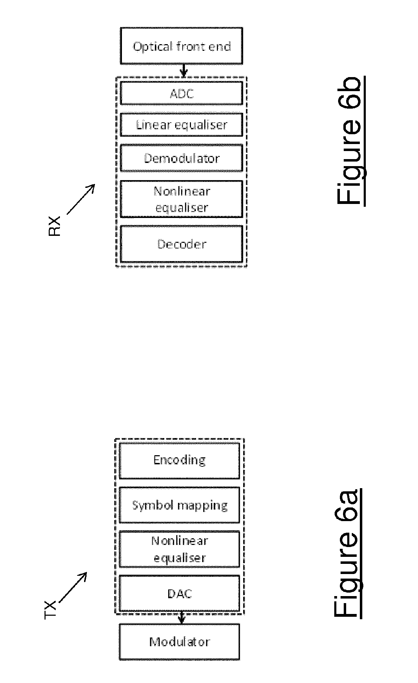

As discussed above, the apparatuses 1 and 1' according to the first and second embodiments of the present invention are both much less complex than a circuit calculating the perturbation term $[\Delta x_t, \Delta y_t]^T$ by plainly implementing equations [2a], [2b]. Hence, they may be practically implemented at either an optical transmitter or an optical coherent receiver, as it will be described in detail herein after with reference to Figures 6a and 6b.

Figure 6a in particular shows an optical transmitter TX comprising an encoding block, a symbol mapping block, a nonlinear equalizer, a digital to analog converter (DAC) and a mapper.

The encoding block receives two sequences of bits to be transmitted (one per each polarization component x, y) and encodes them, e.g. using a FEC coding algorithm.

For each polarization component x, y, the symbol mapping block maps each pattern of m encoded bits into a corresponding symbol having a certain complex amplitude.

The nonlinear equalizer preferably comprises the apparatus 1 or the apparatus 1'. In particular, the nonlinear equalizer preferably calculates a perturbation term $[\Delta x_t, \Delta y_t]^T$ for each pair of symbols on the two polarization components x, y as described above and subtracts it from their complex amplitudes. This allows implementing a pre-compensation of the nonlinear distortions which the pulses carrying those symbols on the two polarizations x, y will undergo during propagation. Pre-compensating the nonlinear distortion which each pulse will undergo during propagation along the optical link advantageously allows calculating the perturbation term $[\Delta x_t, \Delta y_t]^T$ in absence of ASE (Amplified Spontaneous Emission) noise. The calculation is accordingly more accurate.

The DAC converts the pre-compensated complex amplitudes of the two symbols into an analog electric signal. The modulator uses the analog, pre-compensated complex amplitudes of the two symbols for modulating the optical carrier on its two polarization components x, y. The optical signal output by the transmitter TX therefore carries two sequences of symbols as two sequences of pulses, one per each polarization component x, y.

Figure 6b shows an optical coherent receiver RX comprising an optical front end, an analog to digital converter (ADC), a linear equalizer, a demodulator, a nonlinear equalizer and a decoder.

The optical front end receives the optical signal carrying two sequences of symbols as two sequences of pulses on its two polarization components x, y and converts it into two electrical signals. The ADC converts the electrical signals in a digital format.

The linear equalizer preferably compensates the distortion which the optical signal undergoes due to linear effects (chromatic dispersion, PMD, etc.) occurring during its propagation along the optical link. The demodulator recovers the complex amplitude of each pulse of the compensated electrical signals.

The nonlinear equalizer preferably comprises the apparatus 1 or the apparatus 1'. In particular, the nonlinear equalizer preferably calculates a perturbation term $[\Delta x_t, \Delta y_t]^T$ for each pair of pulses on the two polarization components x, y as described above, and subtracts it from their complex amplitudes. Implementing the nonlinear equalizer after the demodulator advantageously allows calculating the perturbation term $[\Delta x_t, \Delta y_t]^T$ at one sample per symbol.

Then, in case of hard-decision FEC decoding, the perturbation term $[\Delta x_t, \Delta y_t]^T$ calculated for each pair of pulses is subtracted from the complex amplitudes of the pulses before FEC decoding performed by the decoder. Otherwise, in case of soft-decision FEC decoding, the perturbation term $[\Delta x_t, \Delta y_t]^T$ is directly input to the decoder, which uses it in the computation of the symbol Log-Likelihood Ratio (LLR).

Even though the above described embodiments relate to a polarization multiplexing modulation schemes, the above principles may be applied also to single polarization modulation schemes, where they also advantageously allow reducing complexity of the circuits comprised in the nonlinear equalizer.

The functions of the various elements shown in Figures 1 and 4, including any functional blocks referred to as "device", "unit", "block", "module", "circuit" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block", "module", "circuit" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

**1.** An apparatus (1, 1') for compensating nonlinear distortions induced on an optical signal during propagation along an optical link, said apparatus comprising a cascade of:

(i) a first circuit (2, 2') configured to receive a sequence of first complex amplitudes $x_t$ of consecutive pulses carried by a first polarization component x of said optical signal, said first circuit (2, 2') being configured to calculate a number of sequences of samples $\left( d_t^{(n)}; d1_t^{(n)}, d2_t^{(n)}, d3_t^{(n)}, d4_t^{(n)} \right)$ by carrying out at least one nonlinear operation on said first complex amplitudes $x_t$;

(ii) a second circuit (3, 3') comprising a number of linear filters (30, 31, ... 3N; 310, 320, 330, 340 ... 31 K, 32K, 33K, 34K) configured to receive and linearly filter said number of sequences of samples $\left( d_t^{(n)}; d1_t^{(n)}, d2_t^{(n)}, d3_t^{(n)}, d4_t^{(n)} \right)$ so as to provide a number of corresponding sequences of linearly filtered samples $\left( o_t^{(n)}; o1_t^{(n)}, o2_t^{(n)}, o3_t^{(n)}, o4_t^{(n)} \right)$

(iii) a third circuit (4, 4') configured to calculate a sequence of first polarization components $\Delta x_t$ of a perturbation nonlinear term $[\Delta x_t, \Delta y_t]^T$ as a first weighted sum of said number of sequences of linearly filtered samples

$$\left( o_t^{(n)}; \; o1_t^{(n)}, \; o2_t^{(n)}, \; o3_t^{(n)}, \; o4_t^{(n)} \right)$$ by using said first complex amplitudes $x_t$ as weights of said first weighted sum; and

(iv) at least one adder (51, 52; 51', 52') configured to compensate said nonlinear distortions by subtracting said sequence of first polarization components $\Delta x_t$ of said perturbation nonlinear term $[\Delta x_t, \Delta y_t]^T$ from said sequence of first complex amplitudes $x_t$.

2. An apparatus (1, 1') according to claim 1, wherein:

• said first circuit (2, 2') is further configured to receive a sequence of second complex amplitudes $y_t$ of consecutive pulses carried by a second polarization component (y) of said optical signal, said first circuit (2, 2') being configured to calculate said number of sequences of samples $\left( d_t^{(n)}; \; d1_t^{(n)}, \; d2_t^{(n)}, \; d3_t^{(n)}, \; d4_t^{(n)} \right)$ by carrying out said at least one nonlinear operation on said first complex amplitudes $x_t$ and on said second complex amplitudes $y_t$;

• said third circuit (4, 4') is further configured to calculate a sequence of second polarization components $\Delta y_t$ of said perturbation nonlinear term $[\Delta x_t, \Delta y_t]^T$ as a second weighted sum of said number of sequences of linearly filtered samples $\left( o_t^{(n)}; \; o1_t^{(n)}, \; o2_t^{(n)}, \; o3_t^{(n)}, \; o4_t^{(n)} \right)$ by using said second complex amplitudes $y_t$ as weights of said second weighted sum; and

• said at least one adder (51, 52; 51', 52') is further configured to compensate said nonlinear distortions by subtracting said sequence of second polarization components $\Delta y_t$ of said perturbation nonlinear term $[\Delta x_t, \Delta y_t]^T$ from said sequence of second complex amplitudes $y_t$.

3. The apparatus (1) according to claim 2, wherein said first circuit (2) is configured to calculate N+1 sequences of samples $d_t^{(n)}$ as:

$$d_t^{(n)} = x_t x_{t-n}^{*} + y_t y_{t-n}^{*},$$

where n is an index ranging between 0 and N and N is an integer number.

4. The apparatus (1) according to claim 3, where N is comprised between 80 and 120.

5. The apparatus (1) according to claim 3 or 4, wherein said second circuit (2) comprises N+1 linear filters (30, 31, ... 3N) configured to receive said N+1 sequences of samples $d_t^{(n)}$ and to provide N+1 corresponding sequences of linearly filtered samples $o_t^{(n)}$ as:

$$o_t^{(n)} = \sum_{m=-N}^{N} d_{t-m}^{(n)} C_{m,n},$$

where $C_{m,n}$ with m=-N... N is the impulse response of said linear filter.

6. The apparatus (1) according to claim 5, wherein said third circuit (4) is configured to calculate said sequence of first polarization components $\Delta x_t$ of said perturbation nonlinear term $[\Delta x_t, \Delta y_t]^T$ and said second polarization components $\Delta y_t$ of said perturbation nonlinear term $[\Delta x_t, \Delta y_t]^T$ as:

$$\Delta x_t = \sum_{n=-N}^{N} x_{t-n} o_t^{(n)}$$

$$\Delta y_t = \sum_{n=-N}^{N} y_{t-n} o_t^{(n)}.$$

7. The apparatus (1') according to claim 2, wherein said first circuit (2') is configured to calculate 4K+4 sequences of samples $d1_t^{(n)}$, $d2_t^{(n)}$, $d3_t^{(n)}$, $d4_t^{(n)}$ as:

$$d1_t^{(n)} = x_t x_{t-n}^* , \; d2_t^{(n)} = y_t y_{t-n}^* , \; d3_t^{(n)} = x_t y_{t-n}^* , \; d4_t^{(n)} = y_t x_{t-n}^*$$

where n is an index ranging between 0 and K and K is an integer number.

8. The apparatus (1') according to claim 7, wherein K is comprised between 3 and 10.

9. The apparatus (1') according to claim 8, wherein said second circuit (3') comprises 4K+4 linear filters (310, 320, 330, 340 ... 31 K, 32K, 33K, 34K) configured to receive said sequences of samples $d1_t^{(n)}$, $d2_t^{(n)}$, $d3_t^{(n)}$, $d4_t^{(n)}$ and to provide 4K+4 sequences of linearly filtered samples $o1_t^{(n)}$, $o2_t^{(n)}$, $o3_t^{(n)}$, $o4_t^{(n)}$ as:

$$o1_t^{(n)} = \sum_{m=-N}^{N} (2 d1_{t-m}^{(n)} + d2_{t-m}^{(n)}) C_{m,n}$$

$$o2_t^{(n)} = \sum_{m=-N}^{N} d3_{t-m}^{(n)} C_{m,n}$$

$$o3_t^{(n)} = \sum_{m=-N}^{N} (2 d2_{t-m}^{(n)} + d1_{t-m}^{(n)}) C_{m,n}$$

$$o4_t^{(n)} = \sum_{m=-N}^{N} d4_{t-m}^{(n)} C_{m,n} \, ,$$

where $C_{m,n}$ with m=-N... N are the impulse response of said linear filters.

10. The apparatus (1) according to claim 9, wherein said third circuit (4') is configured to calculate said sequence of

first polarization components $\Delta x_t$ of said perturbation nonlinear term $[\Delta x_t, \Delta y_t]^T$ and said second polarization components $\Delta y_t$ of said perturbation nonlinear term $[\Delta x_t, \Delta y_t]^T$ as:

$$\Delta x_t = \sum_{n=-K}^{K}\left(x_{t-n}o1_t^{(n)} + y_{t-n}o2_t^{(n)}\right)$$

$$\Delta y_t = \sum_{n=-K}^{K}\left(y_{t-n}o3_t^{(n)} + x_{t-n}o4_t^{(n)}\right).$$

11. The apparatus (1, 1') according to any of the preceding claims, wherein each one of said number of linear filters is a FIR filter implemented in the frequency domain as a cascade of an FFT block, a multiplier and an IFFT block.

12. A transmitter (TX) for an optical coherent transmission system comprising an apparatus for compensating nonlinear distortions according to any of claims 1 to 11.

13. A receiver (RX) for an optical coherent transmission system comprising an apparatus for compensating nonlinear distortions according to any of claims 1 to 11.

14. A method for compensating nonlinear distortions induced on an optical signal during propagation along an optical link, said method comprising:

(i) receiving a sequence of first complex amplitudes $x_t$ of consecutive pulses carried by a first polarization component x of said optical signal, and calculating a number of sequences of samples $\left(d_t^{(n)}; d1_t^{(n)}, d2_t^{(n)}, d3_t^{(n)}, d4_t^{(n)}\right)$ by carrying out at least one nonlinear operation on said first complex amplitudes $x_t$;

(ii) receive and linearly filter said number of sequences of samples $\left(d_t^{(n)}; d1_t^{(n)}, d2_t^{(n)}, d3_t^{(n)}, d4_t^{(n)}\right)$ so as to provide a number of corresponding sequences of linearly filtered samples $\left(o_t^{(n)}; o1_t^{(n)}, o2_t^{(n)}, o3_t^{(n)}, o4_t^{(n)}\right)$;

(iii) calculating a sequence of first polarization components $\Delta x_t$ of a perturbation nonlinear term $[\Delta x_t, \Delta y_t]^T$ as a first weighted sum of said number of sequences of linearly filtered samples $\left(o_t^{(n)}; o1_t^{(n)}, o2_t^{(n)}, o3_t^{(n)}, o4_t^{(n)}\right)$ by using said first complex amplitudes $x_t$ as weights of said first weighted sum; and

(iv) compensating said nonlinear distortions by subtracting said sequence of first polarization components $\Delta x_t$ of said perturbation nonlinear term $[\Delta x_t, \Delta y_t]^T$ from said sequence of first complex amplitudes $x_t$.

15. A computer program product comprising computer-executable instructions for performing, when the program is run on a computer, the steps of the method of claim 14.

## Figure 1

# Figure 2

(a)

(b)

## Figure 3

## Figure 4

3-Channel 32 GBaud PDM-16QAM after 20 spans of 100 km SSM Fiber

# Figure 5

TX

RX

| Modulator | DAC | Nonlinear equaliser | Symbol mapping | Encoding |

## Figure 6a

| Decoder | Nonlinear equaliser | Demodulator | Linear equaliser | ADC | Optical front end |

## Figure 6b

Europäisches
Patentamt

European
Patent Office

Office européen
des brevets

# EUROPEAN SEARCH REPORT

Application Number

EP 15 30 6613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/071652 A1 (ZHUGE QUNBI [CA] ET AL) 12 March 2015 (2015-03-12) * paragraphs [0002], [0024], [0027], [0029], [0031], [0034], [0035], [0054] * | 1-15 | INV. H04B10/2543 H04B10/61 |
| A | EP 2 629 471 A2 (FUJITSU LTD [JP]) 21 August 2013 (2013-08-21) * paragraph [0066] * * claims 1, 3 * | 1-15 | |
| A | EZRA IP: "Complexity reduction algorithms for nonlinear compensation using digital backpropagation", PHOTONICS CONFERENCE (IPC), 2012 IEEE, IEEE, 23 September 2012 (2012-09-23), pages 388-389, XP032269123, DOI: 10.1109/IPCON.2012.6358655 ISBN: 978-1-4577-0731-5 * the whole document * | 1-15 | TECHNICAL FIELDS SEARCHED (IPC) H04B |

The present search report has been drawn up for all claims

| Place of search | Date of completion of the search | Examiner |
|---|---|---|
| Munich | 16 March 2016 | Ganzmann, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 6613

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2016

| Patent document cited in search report | Publication date | Patent family member(s) | Publication date |
|---|---|---|---|
| US 2015071652 A1 | 12-03-2015 | NONE | |
| EP 2629471 A2 | 21-08-2013 | CN 103259597 A<br>EP 2629471 A2<br>JP 2013172457 A<br>US 2013216238 A1 | 21-08-2013<br>21-08-2013<br>02-09-2013<br>22-08-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z. TAO et al.** Complexity-reduced digital nonlinear compensation for coherent optical system. *Proc. Next-Generation Optical Communication: Components, Sub-Systems, and Systems II (SPIE 2013),* 05 February 2013, vol. 8647